# EUROPÄISCHE PATENTANMELDUNG

(11) **EP 4 779 159 A1**
(43) Veröffentlichungstag der Anmeldung: **22.07.2026**
(21) Anmeldenummer: 25152688.5
(22) Anmeldetag: 17.01.2025
(51) Int. Cl.: F16B 2/00, F16B 7/18, F16B 7/06

(54) **EINE BOLZENMUTTER, EIN HERSTELLUNGSVERFAHREN DAFÜR SOWIE EINE UNTERDECKENKONSTRUKTION MIT DIESEN BOLZENMUTTERN**

(71) Anmelder: Böllhoff Verbindungstechnik GmbH, 33649 Bielefeld (DE)
(72) Erfinder: DRAHT, Torsten, 33758 Schloß Holte-Stukenbrock (DE); KETZER, Frederic, 33397 Rietberg (DE); PURRIO, Marcel, 33739 Bielefeld (DE)
(74) Vertreter: HWP Intellectual Property

(57) **Zusammenfassung**

Eine Bolzenmutter (1) zur Befestigung einer Unterdeckenkonstruktion, die die folgenden Merkmale aufweist: ein Rohr (10) mit einem ersten offenen Rohrende (12) und einem zweiten offenen Rohrende (14) sowie einem die Rohrenden (12, 14) verbindenden Durchgangskanal (16), wobei das erste Rohrende (12) und bevorzugt das zweite offene Rohrende (14) derart verjüngt sind, dass sie einen kleineren Innen- und Außendurchmesser als der sie verbindende Durchgangskanal (16) aufweisen, ein Mutterngewinde (30), das an einer radialen Innenseite benachbart zum ersten Rohrende (12) angeordnet ist, einen Verbindungsbolzen (40), vorzugsweise ein Gewindebolzen, mit einem Schaft (44) und einem Kopf (42), der angrenzend an das zweite Rohrende (14) formschlüssig und drehbar in dem Durchgangskanal (16) gehalten ist, und ein Reibungsmittel, mit dem ein Reibmoment zwischen dem Rohr und dem Verbindungsbolzen generierbar ist, welches einer Relativdrehung zwischen dem Rohr (10) und dem Verbindungsbolzen (40) entgegenwirkt.

## Beschreibung

### 1. Gebiet der Erfindung

Die vorliegende Erfindung betrifft eine Bolzenmutter zur Befestigung einer Unterdeckenkonstruktion und eine Unterdeckenkonstruktion, die damit befestigt ist. Des Weiteren betrifft vorliegende Erfindung ein Herstellungsverfahren der Bolzenmutter.

### 2. Hintergrund der Erfindung

Im Stand der Technik sind Unterdeckenkonstruktionen bekannt, die zur Ausstattung von Gebäuden genutzt werden. Zu derartigen Unterdeckenkonstruktionen zählen beispielsweise Belüftungssysteme oder allgemeine Kanäle, um Luftmassen oder andere Medien im Gebäude zu bewegen. Derartige Kanäle werden unter anderem mit Gewindestangen und Spannschlössern und ähnlichem befestigt, mit denen eine Höheneinstellung der zu befestigenden Kanäle möglich ist.

Bekannte Konstruktionen haben den Nachteil, dass nur mit großem Material und Zeitaufwand eine Änderung, beispielsweise in der Neigung eines Kanalsystems, realisiert werden kann.

Eine Zusammenfassung verschiedener oben genannter Systeme liefert die europäische Patentanmeldung EP 1 616 121 A1.

Zur Befestigung von Kanalabschnitten werden Gewinderohre verwendet, wie sie beispielgebend in JP 071 193 37 A beschrieben sind. Diese bestehen aus einem Hohlrohr, an dessen offenen Enden jeweils ein Innengewinde mithilfe eines Gewindeeinsatzes angeordnet ist.

Eine ähnliche Konstruktion beschreibt US 4,081,219. Dieses Dokument beschreibt ein Hohlrohr mit einem Innengewinde, sodass an beiden Rohrenden hohlzylindrische Elemente eingeschraubt werden können. Das eine hohlzylindrische Element bildet beispielsweise ein Innengewinde, da es an seiner radialen Innenseite ein weiteres Gewinde bereitstellt. Das andere eingeschraubte hohlzylindrische Element bildet eine Buchse, sodass eine Gewindestange mit einem Auflagestück sich an dieser Stelle von innen abstützen kann. Derartige Konstruktionen sind aufwändig sowohl in der Herstellung ihrer Einzelteile als auch in ihrer Zusammensetzung. Zudem erfordern sie eine Abstimmung der Gewinde untereinander sowie einen hohen Installationsaufwand, um eine passende Höheneinstellung für eine Unterdeckenkonstruktion erreichen zu können.

Um in einem Hohlrohr ein Innengewinde bereitstellen zu können, wurden bereits vor Jahren Einsteckeinsätze unterschiedlichster Bauart entwickelt. Beispielsweise beschreibt EP 1 873 406 A1 einen derartigen Einsatz, der im gesetzten Zustand aus zwei teleskopartig ineinandergreifenden konischen Hülsenabschnitten besteht. Diese Hülsenabschnitte sind fest miteinander verbunden, wobei sich diese Verbindung auf Grundlage einer vorhandenen Sollbruchstelle beim Setzen lösen lässt. Während die eine Hülse, im speziellen die innere Hülse ein Innengewinde bereitstellt, sorgt die jeweils konische Außenkontur beider Hülsen für ein reibschlüssiges Festpressen des Einsteckeinsatzes, beispielsweise in einem Metallrohr. Durch die doppelt konische Konstruktion der teleskopartig ineinandergreifenden Hülsen besteht die Gefahr der Verformung der Gewindehülse. Dies beeinflusst negativ die Lauffähigkeit der Gewindeverbindung.

DE 26 30 344 sowie DE 33 27 751 beschreiben jeweils einen Einsteckeinsatz, der aus einer über eine Sollbruchstelle verbundene konische Gewindehülse und einer sich daran anschließenden hohlzylindrischen Befestigungshülse zusammensetzt. Die teleskopartige Verbindung beider Hülsen hat den Nachteil, dass an dem direkten Kontakt beider Hülsen eine integrale Verbindung mit Sollbruchstelle vorgesehen ist. Durch die direkte Verbindung besteht der Nachteil, dass die vorgesehene Sollbruchstelle die Verbindung beider Hülsen beim Setzen nicht sauber löst. Auf diese Weise werden die Hülsen in ihrem Übergangsbereich beschädigt oder Materialreste aus der Hülsenverbindung in den Zwischenraum beider Hülsen geschleppt. Derartige Materialreste führen zur Verformung der ineinandergreifenden Hülsen oder blockieren das teleskopartige Aufeinanderschieben beider Hülsen. Auf diese Weise läuft der Setzvorgang eines derartigen Einsatzes nicht reibungslos ab, sodass die Gewindehülse ungenau in dem Rohrende gesetzt ist.

Im Stand der Technik sind verschiedene Konstruktionen von Spannschlössern bekannt, die durch ein durchgängiges Rohr gebildet werden, welches an seinen Rohrenden jeweils ein Gewinde aufweist. Diese Spannschlösser zeichnen sich dadurch aus, dass die Gewinde an den Rohrenden eine entgegengesetzte Gangrichtung bzw. einen entgegengesetzten Drehsinn aufweisen. Denn auf diese Weise ist es möglich, durch die Drehung des Spannschlosses in eine Richtung, die beiden Gewindestangen an den Rohrenden entweder aufeinanderzu zu bewegen oder durch die Drehung in die andere Richtung voneinander weg zu bewegen. Ein derartiges Spannschloss ist beispielsweise in EP 0 033 143 A1 beschrieben.

Neben den Mutterngewinden an den einander gegenüberliegenden Rohrenden weist das durchgängige Rohr an seiner radialen Außenseite ein Antriebsmittel in Form eines Mehrkants, hier im speziellen ein Sechskant, auf. Über diesen Sechskant kann mithilfe eines Maulschlüssel das Spannschloss leichter gespannt oder gelockert werden. Ein derartiges Spannschloss ist in US 2,363,050 beschrieben.

Zudem beschreibt US 125,999 ein Spannschloss, welches nur an einer Seite des durchgängigen Rohres ein Mutterngewinde aufweist. Am anderen Ende des durchgängigen Rohres wird der Kopf eines Gewindebolzens gehalten. Auch diese Kombination aus Mutterngewinde und Gewindebolzen zeichnen sich durch zwei Gewinde mit entgegengesetztem Drehsinn aus.

Es ist die Aufgabe vorliegender Erfindung, eine in Ergänzung zum Stand der Technik zusätzliche Befestigungsmöglichkeit für eine Unterdeckenkonstruktion vorzuschlagen, die in der Herstellung und in der Installation eine kostengünstige Alternative zum Stand der Technik darstellt.

### 3. Zusammenfassung der Erfindung

Die obige Aufgabe wird durch eine Bolzenmutter zu Befestigung einer Unterdeckenkonstruktion gemäß dem unabhängigen Patentanspruch 1 gelöst. Des Weiteren löst obige Aufgabe eine Unterdeckenkonstruktion mit dieser Bolzenmutter gemäß Patentanspruch 13 sowie ein Herstellungsverfahren für eine derartige Bolzenmutter gemäß dem unabhängigen Patentanspruch 14. Vorteilhafte Ausgestaltungen und Weiterentwicklungen gehen aus der folgenden Beschreibung, den begleitenden Zeichnungen sowie den anhängenden Patentansprüchen hervor.

Eine Bolzenmutter zur Befestigung einer Unterdeckenkonstruktion, die die folgenden Merkmale aufweist: ein Rohr mit einem ersten offenen Rohrende und einem zweiten offenen Rohrende sowie einem die Rohrenden verbindenden Durchgangskanal, wobei das erste Rohrende und bevorzugt das zweite offene Rohrende derart verjüngt sind, dass sie einen kleineren Innen- und Außendurchmesser als der sie verbindende Durchgangskanal aufweisen, ein Mutterngewinde, das an einer radialen Innenseite benachbart zum ersten Rohrende angeordnet ist, einen Verbindungsbolzen, vorzugsweise ein Gewindebolzen, mit einem Schaft und einem Kopf, der angrenzend an das zweite Rohrende formschlüssig und drehbar in dem Durchgangskanal gehalten ist, und ein Reibungsmittel, mit dem ein Reibmoment zwischen dem Rohr und dem Verbindungsbolzen generierbar ist, welches einer Relativdrehung zwischen dem Rohr und dem Verbindungsbolzen entgegenwirkt.

Die erfindungsgemäße Bolzenmutter stellt im Hinblick auf bekannte Befestigungsmittel eine effektive und alternative Befestigungsmöglichkeit dar. Vorzugsweise ist diese Bolzenmutter abgestimmt, um beispielsweise Rohrschellen in einer Unterdeckenkonstruktionen zu befestigen. Dazu wird der Verbindungsbolzen an der Rohrschelle befestigt. Der Verbindungsbolzen hat dazu vorzugsweise die Konfiguration eines Gewindebolzens, der in ein Aufnahmegewinde der Rohrschelle eingeschraubt werden kann. In gleicher Weise ist es ebenfalls bevorzugt, den Verbindungsbolzen an seinem Schaft mit einem Bajonettverschluss oder einer Rastverbindung oder einer ähnlichen Alternative zur Herstellung einer reibschlüssigen und/oder kraftschlüssigen Verbindung zur Rohrschelle oder einer ähnlichen Konstruktion herzustellen. Gemäß einer bevorzugten Ausführungsform vorliegender Erfindung ist der Verbindungsbolzen als Gewindebolzen mit einem Standardgewinde auf seinem Schaft ausgestattet.

Mindestens ein erfindungsgemäßes Reibungsmittel ist dazu vorgesehen und angepasst, um eine Drehung des Verbindungsbolzens um seine Längsachse innerhalb des Rohrs der Bolzenmutter zu erschweren. Dazu wird vorzugsweise eine auftretende Reibung zwischen einer dem Schaft zugewandten Kopfunterseite und einer Angriffsfläche des Rohrs oder einer vom Schaft abgewandten Kopfoberseite und einer Angriffsfläche des Rohrs oder einer Feder oder einem elastischen Reibungsmittel gesteigert. Die auftretende Reibung stellt bevorzugt ein Reibmoment dar, welches einer Relativdrehung zwischen dem Rohr und dem Verbindungsbolzen entgegenwirkt. Dadurch wird bevorzugt unterstützt, dass ein Werker die Bolzenmutter und im Speziellen den Gewindeschaft durch Drehen des Rohrs in ein aufnehmendes Mutterngewinde einschrauben kann.

Daher ist es bevorzugt, dass das Mutterngewinde am ersten Rohrende und das Gewinde auf dem Schaft des Verbindungsbolzens den gleichen Drehsinn aufweisen. In anderen Worten bedeutet das, dass das Mutterngewinde und das Gewinde des Verbindungsbolzens ein Rechtsgewinde oder ein Linksgewinde sind.

Als Reibungsmittel sind verschiedene Ausführungsformen bevorzugt. Ein Reibungsmittel gemäß vorliegender Erfindung erzeugt nicht zwingend selbst ein Reibmoment. Besteht das Reibungsmittel vorzugsweise aus einer Feder, die im Rohr angeordnet ist, dann erhöht sie durch ihre Federkraft bevorzugt die Reibung zwischen dem Kopf und dem Rohr. Weiter bevorzugt greift die Feder direkt an den Kopf an. In diesem Fall erschwert die Federkraft eine Relativdrehung zwischen Feder und Verbindungsbolzen.

Ebenfalls bevorzugt ist eine Feder im Durchgangskanal positioniert, die den Verbindungsbolzen in Richtung Verbindungsschaft drückt. Diese zusätzlich Kraftwirkung steigert ebenfalls die Reibung zwischen der Kopfunterseite und einer daran angreifenden Oberfläche des Rohrs.

Weitere bevorzugte und optionale Reibungsmittel sind unten näher erläutert. Während der Verbindungsbolzen formschlüssig und drehbar im Inneren der Bolzenmutter gehalten ist, weist das dem Verbindungsbolzen gegenüberliegende Ende des Rohrs ein radial inneres Mutterngewinde auf. In dieses Mutterngewinde ist zur weiteren Befestigung der Bolzenmutter beispielsweise eine Gewindestange oder ein Bolzen einschraubbar. Da vorzugsweise das Mutterngewinde benachbart zum Eingang in den Durchgangskanal des Rohrs angeordnet ist, bildet der Durchgangskanal einen sich an das Mutterngewinde anschließenden Aufnahmeraum für eine Gewindestange oder dergleichen. Auf diese Weise stellt die Kombination aus Mutterngewinde und sich daran anschließendem Durchgangskanal eine flexible Ausgleichsmöglichkeit bei der Nutzung der Bolzenmutter zur Verfügung. Denn beispielsweise zur Einstellung der Höhe einer an einer Deckenkonstruktion befestigten Rohrschelle lässt sich eine Gewindestange unterschiedlich weit in den Durchgangskanal einschrauben.

Das erste Rohrende ist verjüngt im Vergleich zu den Abmessungen des Durchgangskanals, indem der Innen- und der Außendurchmesser kleiner ausgebildet sind als die des Durchgangskanals. Diese spezielle Formgebung ermöglicht im Herstellungsschritt des Verjüngens des ersten Rohrendes, vorzugsweise durch Verpressen, gemeinsam mit dem Verpressen ein Mutterngewinde an der radialen Innenseite und vorzugsweise ein Antriebsmittel an der radialen Außenseite auszuformen. Auf diese Weise wird die Herstellung kostengünstiger und die Handhabung beispielswiese durch das Antriebsmittel vereinfacht.

Ohne die Verjüngung des ersten Rohrendes wären mehr Arbeitsschritte zur Erzielung ähnlicher funktioneller Merkmale erforderlich, wie beispielsweise Gewindeschneiden oder auch radial äußere Bearbeitung.

Dass Verjüngen des ersten Rohrendes hat zudem den bevorzugten funktionellen Vorteil, dass das erste Rohrende auf einen vordefinierten Innendurchmesser verjüngt werden kann. Dieser Innendurchmesser gibt bevorzugt den gewünschten Kerndurchmesser des späteren Mutterngewindes vor. Somit wird ein Einpressen unterschiedlich dimensionierter Blindnietmuttern oder Gewindeeinsätze im Stand der Technik durch das Verformen der Verjüngung ersetzt.

Neben der Funktion des Durchgangskanals als Aufnahmevolumen für eine Gewindestange oder dergleichen dient der Durchgangskanal ebenfalls als Durchgriffsmöglichkeit auf den Verbindungsbolzen. Zu diesem Zweck weist der Kopf des Verbindungsbolzens bevorzugt ein Antriebsmerkmal auf, in welches man mit einem Werkzeug durch das Mutterngewinde und durch den Durchgangskanal hindurch eingreifen kann.

In einer bevorzugten Ausgestaltung der Bolzenmutter ist das zweite Rohrende derart verjüngt, dass ein Innendurchmesser einer Verjüngung kleiner ist als ein Außendurchmesser des Kopfes und größer als ein Außendurchmesser des Schafts, um den Kopf als Verbindungsbolzen formschlüssig und drehbar im Durchgangskanal zu halten.

Der bevorzugte Verbindungsbolzen oder der bevorzugte Gewindebolzen wird auf unterschiedliche Art und Weise benachbart zum zweiten Rohrende befestigt. Da sich der Kopf des Verbindungsbolzens radial über den Außendurchmesser des Schafts des Verbindungsbolzens hinaus erstreckt, ist eine formschlüssige Verbindung am zweiten Rohrende ausreichend, um den Verbindungsbolzen um seine Längsachse drehbar innerhalb des Durchgangskanals zu halten. Trotz dieser formschlüssigen Befestigung ragt der Schaft des Verbindungsbolzens durch die zweite Rohröffnung aus dem Rohr der Bolzenmutter hinaus, um eine entsprechende Verbindung herstellen zu können.

Vorzugsweise ist die Verjüngung des zweiten Rohrendes durch einen Buchseneinsatz oder durch eine Verpressung des Rohrs bereitgestellt.

Um den Verbindungsbolzen über seinen Kopf formschlüssig im Inneren des Durchgangskanals halten zu können, sind verschiedene konstruktive Alternativen zur Realisierung bevorzugt. Die eine Alternative besteht darin, das Rohr der Bolzenmutter durch ein Verpressen so weit in seinem Innendurchmesser zu verkleinern, dass der Kopf des Verbindungsbolzens im Durchgangskanal drehbar gehalten wird. Alternativ dazu bietet sich an, einen Buchseneinsatz benachbart zum zweiten Rohrende innerhalb des Durchgangskanals zu setzen. Ein derartiger Buchseneinsatz stellt vorzugsweise eine hohlzylindrische Verjüngung des Inneren des Durchgangskanals dar, an welcher sich die Unterseite des Kopfes des Verbindungsbolzens abstützen kann.

Eine weitere bevorzugte Ausführungsform vorliegender Erfindung sieht vor, einen Einsteckeinsatz in das zweite Rohrende der Bolzenmutter zu setzen. Ein derartiger Einsteckeinsatz besteht bevorzugt aus der Kombination eines hohlzylindrischen und eines konischen Abschnitts, die in einem Setzvorgang teleskopartig ineinander geschoben werden. Die damit verbundene Aufweitung des Rohrendes führt zu einer reibschlüssigen und formschlüssigen Befestigung des Einsteckeinsatzes in dem Rohr der Bolzenmutter. Da ein derart gesetzter Einsteckeinsatz ebenfalls den Innendurchmesser des Rohrs der Bolzenmutter verringert, stützt sich der Kopf des Verbindungsbolzens formschlüssig daran ab und wird im Inneren des Durchgangskanals gehalten.

Der erfindungsgemäße Vorteil des Einsteckeinsatzes besteht in der Flexibilität der Einstellung des durchgängigen Innendurchmessers am zweiten Rohrende der Bolzenmutter. Denn in Abhängigkeit von der Dimension des gewählten Verbindungsbolzens lässt sich darauf abgestimmt die Dimension des Einsteckeinsatzes wählen, sodass neben der Lauffähigkeit auch ein verlässlicher Halt des Verbindungsbolzens in der Bolzenmutter bevorzugt gewährleistet sind. Des Weiteren eröffnet die Nutzung des Einsteckeinsatzes die bevorzugte Flexibilität, eine Länge des Rohrs der Bolzenmutter, beispielsweise auf einer Baustelle, durch einen Werker anzupassen. Nachfolgend wird dann ebenfalls vor Ort bevorzugt der Einsteckeinsatz durch ein passendes Handgerät und unter gleichzeitiger Anordnung des Verbindungsbolzens im Inneren des Durchgangskanals gesetzt, sodass eine an die bauliche Situation anpassbare Bolzenmutter bereitstellbar ist. Vorzugsweise ist der Einsteckeinsatz kraft- und formschlüssig mit dem Rohr verbunden.

Gemäß einer weiteren bevorzugten Ausgestaltung vorliegender Erfindung weisen das Mutterngewinde und ein Gewinde eines Gewindebolzens als Verbindungsbolzen einen gleichen Drehsinn auf.

Gemäß einer weiteren bevorzugten Ausführungsform der Bolzenmutter ist der Verbindungsbolzen über den Kopf in Richtung des zweiten verjüngten Rohrendes axial federvorgespannt.

Erfindungsgemäß bevorzugt ist der Verbindungsbolzen in Richtung des zweiten Rohrendes federvorgespannt. Entsprechend ragt der Schaft federvorgespannt aus dem Rohr am zweiten Rohrende heraus. Zudem wird der Kopf des Verbindungsbolzens gegen die Verjüngung des zweiten Rohrendes, also gegen die radial innere Rohrwand gedrückt, wodurch eine Reibung zwischen Verbindungsbolzen und Rohr erhöht wird. Die Reibung wirkt einer Relativdrehung zwischen Verbindungsbolzen und Rohr entgegen.

Ausgehend von unterschiedlichen bevorzugten Konstruktionsalternativen des Rohrs und darin angeordneter Federn wird der obige Reibungseffekt erzielt. Gemäß einer bevorzugten Ausführungsform ist eine Schraubenfeder vorgespannt im Durchgangskanal zwischen dem ersten Rohrende und dem Kopf des Verbindungsbolzens angeordnet.

Gemäß einer weiteren bevorzugten Ausführungsform weist der Durchgangskanal eine innere Kanalverjüngung benachbart zum zweiten Rohrende auf. Die Kanalverjüngung ragt an der radialen Innenseite des Durchgangskanals in den Durchgangskanal und dient als Widerlager oder abstützender Steg. Zwischen Kanalverjüngung und Kopf sind bevorzugt, alternativ oder kombiniert, eine Schraubenfeder, eine Tellerfeder, eine Wellenfeder angeordnet. Dabei ist die Kanalverjüngung so ausgebildet, dass man durch den Durchgangskanal auf das Antriebsmittel im Kopf des Verbindungsbolzens zugreifen kann.

Ebenfalls bevorzugt spannt eine Schraubenfeder innerhalb des Durchgangskanals als Reibungsmittel angeordnet zwischen dem ersten verjüngten Rohrende und dem Kopf den Verbindungsbolzen in Richtung des zweiten verjüngten Rohrendes über die Feder vor.

In einer weiteren bevorzugten Ausführungsform vorliegender Bolzenmutter ist der Kopf zwischen dem zweiten verjüngten Rohrende und einer Kanalverjüngung benachbart zum zweiten verjüngten Rohrende formschlüssig drehbar gehalten.

Vorzugsweise ist ein Elastomerring als Reibungsmittel zwischen dem Kopf und der Kanalverjüngung und/oder dem Kopf und dem zweiten verjüngten Rohrende angeordnet.

Basierend auf der in der Bolzenmutter angeordneten Feder wird der Verbindungsbolzen bevorzugt mit der Unterseite seines Kopfes gegen die Verengung oder den Buchseneinsatz oder den Einsteckeinsatz am zweiten Rohrende gedrückt. Dieser reibschlüssige Kontakt bildet die Grundlage dafür, dass der Verbindungsbolzen, vorzugsweise ein Gewindebolzen, allein durch Drehen des Rohrs der Bolzenmutter in ein Aufnahmegewinde eingeschraubt werden kann. Somit ist es nicht in jedem Fall erforderlich, ein Werkzeug durch das erste Rohrende mit dem Antriebsmittel des Kopfes des Gewindebolzens zu verbinden, um diesen zu drehen.

Ein funktionell gleichwertiges Reibmoment oder eine Steigerung einer Reibung zwischen Kopf des Verbindungsbolzens und dem Rohr ist mit Hilfe eines zwischen Rohr und Kopf angeordnetem Elastomer- oder Kunststoffrings erzielbar. Zu diesem Zweck ist es nicht zwingend erforderlich, dass eine Feder den Elastomer- oder Kunststoffring und den Kopf zusammendrückt. Es ist vielmehr ausreichend, dass der Elastomerring oder Kunststoffring während seiner Installation im Rohr oder während der Installation der Bolzenmutter durch den Kopf komprimiert wird.

Ein Zusammendrücken oder Komprimieren des Elastomer- oder Kunststoffrings stattet den Elastomer- oder Kunststoffring mit dem Bestreben aus, sich wieder zu entspannen und damit auszudehnen. Dieses Bestreben übt eine reibungssteigernde Kraft auf den Kopf aus, um die bereits oben beschriebenen Funktionen des Reibungsmoments zu fördern.

Gemäß einer weiteren bevorzugten Ausführungsform der Bolzenmutter ist eine Feder zwischen der Kanalverjüngung und dem Kopf angeordnet, sodass der Verbindungsbolzen in Richtung des zweiten verjüngten Rohrendes zwischen der Kanalverjüngung und dem zweiten verjüngten Rohrende federvorgespannt ist.

Ebenfalls bevorzugt ist/sind ein Elastomerring und/oder ein Federring als Reibungsmittel auf dem Schaft des Verbindungsbolzens außerhalb des Rohrs angeordnet, mit dem ein Reibmoment zwischen dem zweiten Rohrende und dem Verbindungsbolzen generierbar ist.

Gemäß vorliegender Erfindung ist es ebenfalls allein oder in Kombination mit den oben beschriebenen Ausgestaltungen bevorzugt, einen Elastomer- oder Kunststoffring auf dem Schaft und in Kontakt mit dem zweiten Rohrende anzuordnen. Dadurch wird funktionell das gleiche Reibungsmoment zwischen Rohr und Verbindungsbozen erzielt, wie es oben beschrieben worden ist. In gleicher Weise ist es bevorzugt, anstelle des Kunststoffrings oder in Kombination damit einen Federring auf dem Schaft des Verbindungsbolzens anzuordnen, der ein Reibmoment zwischen Rohr und Verbindungsbolzen aufgrund einer reibschlüssigen Verbindung erzeugt.

In einer weiteren bevorzugten Ausführungsform der erfindungsgemäßen Bolzenmutter weist das erste verjüngte offene Rohrende an einer radialen Außenseite ein Antriebsmerkmal, vorzugsweise zwei einander gegenüberliegende Angriffsflächen oder einen Mehrkant, auf.

Ebenfalls bevorzugt ist an einer radialen Außenseite des Durchgangskanals ein Antriebsmerkmal, vorzugsweise zwei einander gegenüberliegende Angriffsflächen oder einen Mehrkant, vorgesehen.

Die oben genannten bevorzugten Antriebsmittel ermöglichen die Nutzung eins Werkzeugs, manuell oder automatisch, um die Bolzenmutter drehend zu verbinden.

Vorzugsweise sind ein Drehsinn des Mutterngewindes des ersten Rohrendes und eines Gewindes des Schafts des Verbindungsbolzens gleich.

Diese bevorzugte konstruktive Ausgestaltung hat beispielsweise einen Vorteil, wenn der Gewindebolzen der Bolzenmutter über Kopf in einer Deckenkonstruktion befestigt wird. Die sich daran anschließende Verschraubung bspw. einer Gewindestange im Mutterngewinde, welches mit dem gleichen Drehsinn wie der Gewindebolzen ausgestattet ist, würde zum Festdrehen oder Einschrauben der Gewindestange die gleiche Drehrichtung nutzen wie der Gewindebolzen. Somit könnte eine Installation bspw. der Gewindestange nicht in eine Lockerung des Gewindebolzens resultieren, sondern würde diesen vielmehr zusätzlich fest drehen.

Vorliegende Erfindung offenbart zudem eine Unterdeckenkonstruktion, insbesondere ein Kanalsystem zur Belüftung, für Verkabelung oder ein Wandelement, welche mit einer Mehrzahl von Bolzenmuttern gemäß zumindest einer der oben beschriebenen Ausgestaltungen an einer Wand oder Decke befestigt ist.

Zudem offenbart vorliegende Erfindung ein Herstellungsverfahren einer Bolzenmutter, insbesondere eine Bolzenmutter gemäß einer der obigen Ausgestaltungen, das die folgenden Schritte aufweist: Bereitstellen eines zylindrischen Rohrs mit einem ersten und einem zweiten offenen Rohrende und einem die Rohrenden verbindenden Durchgangskanal, Bereitstellen eines zylindrischen Rohrs mit einem ersten und einem zweiten offenen Rohrende und einem die Rohrenden verbindenden Durchgangskanal, das einen Innen- und einen Außendurchmesser aufweist, Verengen des ersten Rohrendes mit einem Innen- und Außendurchmesser, die kleiner sind als die des Rohrs und des Durchgangskanals, Einformen eines Mutterngewindes in eine radiale Innenseite des ersten radialen Rohrendes, Anordnen in dem Durchgangskanal eines Verbindungsbolzens mit einem Kopf und einem Schaft und Anordnen eines Reibungsmittels angreifend an den Kopf des Verbindungsbolzens, das einer Relativdrehung zwischen dem Rohr und dem Verbindungsbolzen entgegenwirkt, und Verengen des zweiten Rohrendes durch Verpressen des zweiten Rohrendes oder Einsetzen eines Einsteckeinsatzes ohne Mutterngewinde oder eines Buchseneinsatzes derart, dass der Schaft am zweiten Rohrende aus dem Durchgangskanal hinaus ragt.

Das erfindungsgemäße Herstellungsverfahren für eine Bolzenmutter ist darauf gerichtet, bekannte Herstellungsverfahren kostengünstiger aber ähnlich effektiv und mit einem genauso verlässlichen Ergebnis zu verbessern. Daher basiert das vorliegende Herstellungsverfahren auf der Umgestaltung eines Rohres und im speziellen der den Durchgangskanal begrenzenden Rohrenden. Denn diese Rohrenden werden gemäß bevorzugten Ausgestaltungen des vorliegenden Herstellungsverfahrens nach der einfachsten Methode umformend verengt. Diese Verengung führt dazu, dass einerseits im Inneren des Durchgangskanals ein Verbindungsbolzen, insbesondere ein Gewindebolzen formschlüssig und drehbar haltbar ist und andererseits im Rahmen des Umformprozesses zumindest des ersten Rohrendes gleichzeitig mit dem Umformen ein Mutterngewinde eingeformt werden kann. Diese effektive Kombination von zuvor einzeln auszuführenden Verfahrensschritten, die beispielsweise ein Gewindeschneiden oder das Einsetzen einer Gewindebuchse beinhalteten, führt zu einer effizienten und kostengünstigen Herstellungsalternative. Optional ist es natürlich immer noch bevorzugt, an dem zweiten Rohrende ohne Mutterngewinde neben einer Verengung durch ein Verpressen des Rohrendes alternativ das Einsetzen eines Einsteckeinsatzes oder eines Buchseneinsatzes oder dergleichen vorzusehen. Diese haben alle das Ziel, den formschlüssigen Halt des Verbindungsbolzens im Rohr zu gewährleisten, während gleichzeitig der Verbindungsbolzen durch Zugriff mit einem Werkzeug durch das erste Rohrende drehbar und befestigbar bleibt.

Gemäß einer bevorzugten Ausgestaltung des Herstellungsverfahrens ist der weitere Schritt vorgesehen: Anordnen einer Feder als Reibungsmittel im Durchgangskanal zum axialen Vorspannen des Verbindungsbolzens.

Um die Bolzenmutter in ihrer Einheit kompakter gestalten zu können, wird vorzugsweise ein Reibungsmittel in der Bolzenmutter installiert. Ein derartiges Reibungsmittel kann unterschiedliche Konstruktionen aufweisen. Gemäß einer bevorzugten Ausführungsform besteht das Reibungsmittel aus einer Feder, die mit einer Vorspannung zwischen dem ersten Rohrende und dem Kopf des Verbindungsbolzens angeordnet ist. Durch die sich auf den Verbindungsbolzen auswirkende Federvorspannung erhöht sich auch die Reibung zwischen dem Kopf des Verbindungsbolzens und der radialen Innenseite des Rohrs der Bolzenmutter. Wird beispielsweise die Bolzenmutter mit dem Verbindungsbolzen in eine Gewindeöffnung eingeschraubt, dann kann dieses Drehmoment über das Rohr auf den Gewindebolzen übertragen werden. Denn die Reibungskräfte zwischen der radialen Innenseite des Rohrs und dem Kopf des Verbindungsbolzens unterstützt durch die Vorspannkraft der Feder sorgen dafür, dass eine Relativdrehung zwischen dem Verbindungsbolzen und dem Rohr eingeschränkt ist und der Verbindungsbolzen mit dem Rohr mitgedreht wird.

Ebenfalls bevorzugt umfasst ein weiterer Schritt Erzeugen einer Kanalverjüngung benachbart zum zweiten Rohrende, um den Kopf zwischen der Kanalverjüngung und dem zweiten Rohrende formschlüssig zu halten.

Gemäß einer weiteren bevorzugten Ausgestaltung des Herstellungsverfahrens wird in das Rohr eine in den Durchgangskanal radial einwärts ragende Kanalverjüngung eingebracht, beispielsweise eingeprägt. Diese Kanalverjüngung ist vorzugsweise benachbart zum Kopf des Verbindungsbolzens angeordnet, sodass der Kopf des Verbindungsbolzens zwischen der Kanalverjüngung und dem zweiten Rohrende formschlüssig drehbar gehalten wird. Die Kanalverjüngung reduziert einen Innendurchmesser des Durchgangskanals, sodass der Verbindungsbolzen sich nicht in Richtung erstes Rohrende bewegen kann. Auf diese Weise wird mithilfe der Kanalverjüngung ein axialer Bewegungsspielraum des Kopfes des Verbindungsbolzens und somit des gesamten Verbindungsbolzens innerhalb des Durchgangskanals eingeschränkt. Diese Einschränkung ist vorzugsweise nutzbar, um ein Reibungsmittel zwischen dem Kopf des Verbindungsbolzens und einer radialen Innenseite des Rohrs derart anzuordnen, dass ein Reibmoment zwischen Verbindungsbolzen und Rohr erzeugt wird. Dieses Reibmoment wirkt wiederum einer Relativdrehung zwischen Verbindungsbolzen und Rohr reduzierend bzw. abbremsend entgegen.

Vorzugsweise erfolgt bei der Herstellung ein Anordnen eines Rings aus elastischem Material als ein Reibungsmittel zwischen dem Kopf des Verbindungsbolzens und dem zweiten Rohrende oder zwischen dem Kopf und einer Kanalverjüngung.

Um eine Relativdrehung zwischen Verbindungsbolzen und Rohr einzuschränken, wird vorzugsweise in dem abgegrenzten Kanalbereich zwischen Kanalverjüngung und zweitem Rohrende ein Ring aus elastischem Material als Reibungsmittel angeordnet. Im Rahmen der Herstellung ist es bevorzugt, den als Reibungsmittel eingesetzten Ring aus Kunststoff oder einem ähnlichen reibungsintensiven Material an einer Oberseite oder an einer Unterseite des Kopfes des Verbindungsbolzens zu platzieren. Zudem wird vorzugsweise dafür gesorgt, dass der Kopf des Verbindungsbolzens in dieser Anordnung reibschlüssig über den Ring mit der Kanalverjüngung und/oder mit der radialen Innenseite des Rohrs in Richtung des zweiten Rohrendes verbunden ist. Selbst wenn somit bevorzugt in diesem abgegrenzten Kanalsystem zwischen dem zweiten Rohrende und der Kanalverjüngung keine Feder angeordnet ist, wirkt das reibschlüssige Anordnen der Kombination aus Ring und Verbindungsbolzen in dem abgegrenzten Kanalsystem für eine bevorzugte Einschränkung der Relativdrehung zwischen Rohr und Verbindungsbolzen.

Ebenfalls bevorzugt wird der weitere Schritt genutzt: Erzeugen eines Antriebsmittels, vorzugsweise zwei einander gegenüberliegend angeordnete Angriffsflächen oder einen Mehrkant, an einer radialen Außenseite des verengten ersten Rohrendes und/oder an einer radialen Außenseite des Durchgangskanals.

Gemäß einer weiteren bevorzugten Ausgestaltung des Herstellungsverfahrens wird während des Verengens zumindest des ersten Rohrendes an einer radialen Außenseite des ersten Rohrendes ein Antriebsmittel erzeugt. Dieses Antriebsmittel besteht beispielsweise aus einem Mehrkant oder zwei gegenüberliegend angeordneten Angriffsflächen für ein Werkzeug, sodass mithilfe des Werkzeugangriffs die Bolzenmutter gedreht werden kann. In gleicher Weise ist es ebenfalls möglich, ein derartiges Angriffsmittel an der radialen Außenseite des Durchgangskanals des Rohrs vorzusehen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine schematische Seitenansicht einer Bolzenmutter, die ein Rohr mithilfe einer Rohrschelle in einer Unterdeckenkonstruktion befestigt,
- Figur 2: eine axiale Schnittdarstellung einer bevorzugten Ausführungsform einer Bolzenmutter,
- Figur 3: eine vergrößerte Darstellung verschiedener Querschnittsprofile am verjüngten Rohrende mit Mutterngewinde,
- Figur 4: eine vergrößerte Darstellung eines bevorzugten Rohrendes der Bolzenmutter in einer Schnittdarstellung mit einem Mutterngewinde an der radialen Innenseite einer Verjüngung sowie ein im Durchgangskanal angeordnetes Reibungsmittel in Form einer Feder,
- Figur 5: bevorzugte radiale Schnittdarstellungen des Rohrs der Bolzenmutter mit unterschiedlichen Umfangsprofilen des Rohrs der Bolzenmutter im Bereich des Durchgangskanals,
- Figur 6: eine bevorzugte Ausführungsform eines axialen Endes der Bolzenmutter, in dem der Verbindungsbolzen mit einer Hülse formschlüssig in dem Rohr gehalten ist,
- Figur 7: eine bevorzugte Ausführungsform eines axialen Endes der Bolzenmutter mit einer Verpressung oder Verjüngung und einer Kanalverjüngung, um den Kopf des Verbindungsbolzens formschlüssig im Rohr zu halten,
- Figur 8: eine weitere bevorzugte Ausführungsform des verjüngten Rohrendes mit Kanalverjüngung, um den Verbindungsbolzen in Kombination mit einem Reibmittel, vorzugsweise ein Kunststoffring, zu halten,
- Figur 9: eine vergrößerte teilweise axiale Schnittansicht eines verjüngten Endes der Bolzenmutter und eines darin angeordneten Verbindungsbolzens, der durch eine Feder Richtung Rohrende vorgespannt und gegen einen Kunststoffring als Reibungsmittel gedrückt wird,
- Figur 10: eine vergrößerte teilweise axiale Schnittdarstellung des verjüngten Rohrendes, benachbart zu dem der Verbindungsbolzen und eine Feder mit Hilfe einer Kanalverjüngung gehalten werden,
- Figur 11: eine vergrößerte teilweise axiale Schnittdarstellung des verjüngten Rohrendes, benachbart zu dem der Verbindungsbolzen und eine Feder mit Hilfe einer Kanalverjüngung gehalten werden,
- Figur 12: eine vergrößerte teilweise axiale Schnittdarstellung des verjüngten Rohrendes, benachbart zu dem der Verbindungsbolzen mit Hilfe einer Kanalverjüngung gehalten wird und der Schaft als Reibungsmittel einen äußeren Kunststoffring und/oder einen Federring aufweist,
- Figuren 13-15: eine schematische Darstellung der bevorzugt aufeinanderfolgenden Phasen des Verpressens oder Verjüngens des Rohrendes und Einformens eines Mutterngewindes an einer radialen Innenseite des ersten Rohrendes,
- Figur 16: eine schematische Darstellung des Einsetzens von Reibungsmittel und Verbindungsbolzen im Durchgangskanal durch das noch nicht verjüngte Rohrende,
- Figur 17-19: eine bevorzugte Darstellung der drei Phasen eines Verjüngungs- oder Verpressverfahrens des Rohrendes ohne Mutterngewinde, an dem danach der Verbindungsbolzen aus dem Rohr heraus ragt,
- Figur 20: eine schematische Darstellung eines bevorzugten Einbringens oder Einformens einer Kanalverjüngung in den Durchgangskanal,
- Figur 21: ein Flussdiagramm einer bevorzugten Ausführungsform des Herstellungsverfahrens der Bolzenmutter.

### 5. Detaillierte Beschreibung der bevorzugten Ausführungsformen

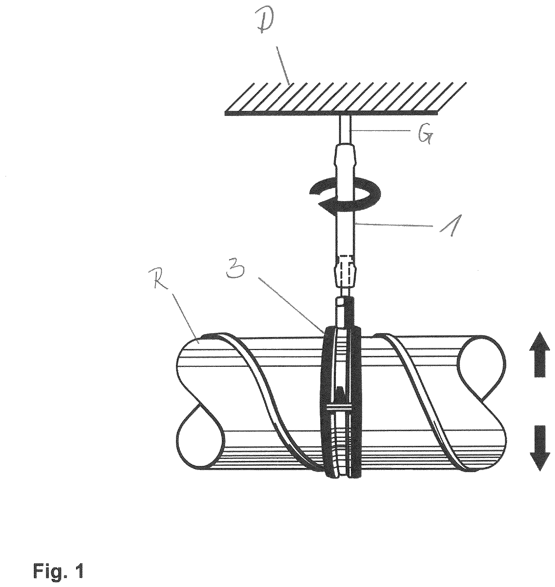

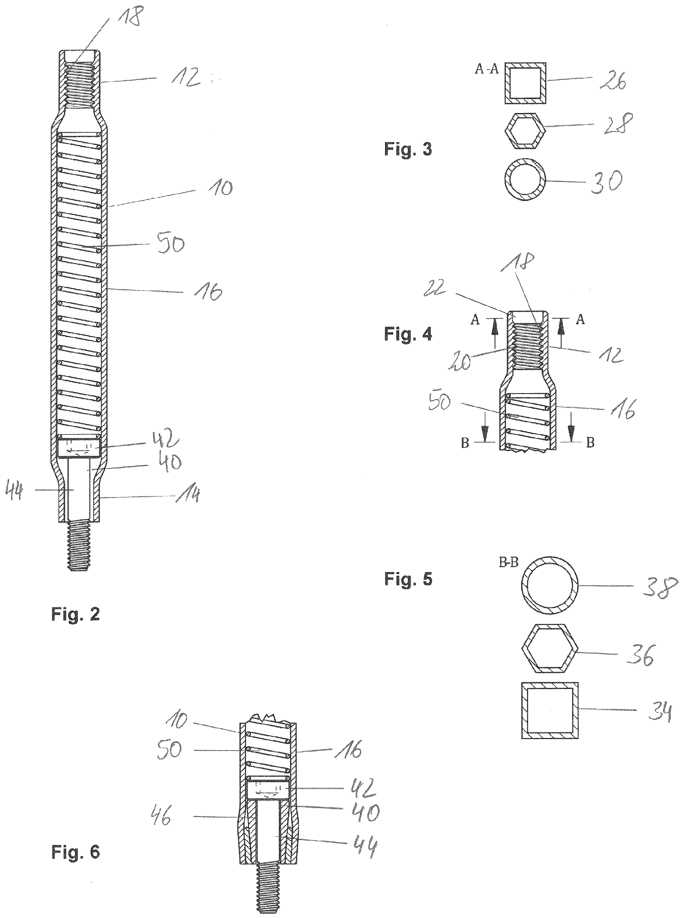

Während Figur 2 einen Längsschnitt durch eine bevorzugte Ausführungsform der erfindungsgemäßen Bolzenmutter 1 zeigt, ist in Figur 1 beispielgebend eine Rohrschelle 3 mit der Bolzenmutter 1 in einer Unterdeckenkonstruktion befestigt. Dazu wurde eine Gewindestange G in einer Decke D verankert, auf die die Bolzenmutter 1 aufgeschraubt ist. Mit dem Verbindungsbolzen der Bolzenmutter 1 ist die ein Rohr R tragende Rohrschelle 3 mit der Bolzenmutter 1 und dadurch mit der Decke D verbunden.

Vorzugsweise besteht das Rohr 10 aus Metall oder Kunststoff.

Weiter bevorzugt besteht das Rohr 10 aus Metall. Das Metall hat eine Bruchdehnung A in einem Bereich von 8 %≤A≤50 %, insbesondere von 15 %≤A≤50 %. Die bevorzugte Bruchdehnung bildet die materialtechnische Grundlage für das Setzen und elastisch-plastische Befestigen des erfindungsgemäß bevorzugten Buchseneinsatzes 60 im Rohr 10 im zweiten Rohrende 14.

Die Bruchdehnung A bestimmt sich gemäß EN ISO 68921: 2019: Metallic materials - Tensile testing - Part 1: Method of test at room temperature.

Gemäß einer bevorzugten Ausgestaltung vorliegender Erfindung besteht das Rohr aus Edelstahl. Edelstahl hat aufgrund seiner Materialeigenschaften den Vorteil, dass es korrosionsbeständig, temperaturbeständig, robuster gegen Umgebungseinflüsse und damit hygienischer im Vergleich zu Stahl ist. Dies gilt insbesondere, wenn es sich um rostfreien Edelstahl handelt, da dessen Oberfläche auch weniger kontaminationsanfällig ist als bspw. Stahl.

Weiter bevorzugt weist das Rohr eine Wandstärke t im Bereich von 0,2 mm≤t≤5 mm, insbesondere 0,3 mm≤t≤2 mm, auf.

Dieser Wandstärkenbereich ist besonders in Kombination mit Edelstahl als Rohrmaterial bevorzugt.

Die bevorzugte Ausführungsform der Bolzenmutter 1 in Figur 2 weist ein Rohr 10 mit einem ersten 12 und einem zweiten offenen Rohrende 14 auf. Die beiden Rohrenden 12, 14 sind über einen in seinem Inneren freien und für ein Werkzeug durchgängigen Durchgangskanal 16 des Rohrs 10 miteinander verbunden.

Das erste Rohrende 12 ist in einer bevorzugten vergrößerten Teildarstellung in Figur 4 gezeigt. Das erste Rohrende 12 weist einen Innendurchmesser und einen Außendurchmesser auf, die kleiner sind als ein Innendurchmesser und ein Außendurchmesser des sich an das erste verjüngte Rohrende 12 anschließenden Durchgangskanals 16.

Vorzugsweise wird das erste Rohrende 12 in dem unten näher beschriebenen Herstellungsverfahren durch Verpressen oder umfängliches Zusammendrücken verjüngt. Dieser einfache Bearbeitungsschritt hat den Vorteil, dass verschiedene Verformungsschritte gleichzeitig oder nur ausgewählte Verfahrensschritte ausgeführt werden können.

Mit dem Verpressen wird eine radiale Innenwand 18 des ersten Rohrendes 12 auf einen Gewindedorn 80 gepresst, sodass an der radialen Innenwand 18 ein bevorzugtes Mutterngewinde 20 ausgeformt wird.

Es ist ebenfalls bevorzugt, nach dem verpressenden Verjüngen des ersten Rohrendes 12 ein Mutterngewinde 20 in die radiale Innenwand 18 zu schneiden. Zwar ist dieser Schritt aufwendiger, eröffnet aber die Möglichkeit, beispielsweise ein Feingewinde als Mutterngewinde 20 zu erzeugen.

Gemäß einer bevorzugten Ausführungsform vorliegender Erfindung ist das Mutterngewinde 20 um eine Strecke 22 axial einwärts in das Rohr 10 eingerückt im ersten verjüngten Rohrende 12 angeordnet. Die eingerückte Strecke 22 oder Einrückung 22 dient dem installierenden Werker als Finde- und Positionierhilfe, um ein männliches Gewindeelement (nicht gezeigt) in das Mutterngewinde 20 einschrauben zu können.

Gemäß einer weiteren bevorzugten Ausführungsform vorliegender Erfindung weist das verjüngte erste Rohrende 12 an seiner radialen Außenseite ein Antriebsmittel 24 auf, die beispielgebend schematisch in Figur 3 gezeigt sind. Das Antriebsmittel 24 wird durch bevorzugt mindestens zwei einander gegenüberliegend angeordnete Angriffsflächen 26 oder durch einen Mehrkant 28 oder durch eine Rändelung 30 an einem runden Querschnitt an der radialen Außenseite gebildet.

Die unterschiedlichen Antriebsmittel 24, 26, 28, 30 werden vorzugsweise beim verpressenden Verjüngen des ersten Rohrendes 12 erzeugt. Vorzugsweise wird dazu ein Backenfutter eingesetzt, dessen Backenflächen 92 radial einwärts das erste Rohrende 12 verpressen. Dabei hinterlassen die Backenflächen 92 einen Abdruck an der radialen Außenseite des verjüngten Rohrendes 12 in Form der Angriffsflächen 26, des Mehrkants 28 und/oder der Rändelung 30.

Es ist ebenfalls bevorzugt, ein derartiges Angriffsmittel 32 an der radialen Außenseite des Durchgangskanals 16 zu erzeugen. Mithilfe von Klemmbacken 102 eines Backenfutters oder ähnlichen Prägewerkzeugen lassen sich die gegenüberliegenden Angriffsflächen 34, ein Mehrkant 36 oder eine Rändelung 38 in der radialen Außenwand des Durchgangskanals 16 ausformen (siehe Figur 5).

Innerhalb des Durchgangskanals 16 ist eine bevorzugte Schraubenfeder 50 als ein Reibungsmittel der Bolzenmutter 10 angeordnet. Die Schraubenfeder 50 stützt sich vorzugsweise am sich verjüngenden Innendurchmesser des Durchgangskanals 16 benachbart zum ersten verjüngten Rohrende 12 ab. Ein Kopf 42 des Verbindungsbolzens 40 drückt bevorzugt die Schraubenfeder 50 in axialer Richtung zum ersten Rohrende 12. Da der Verbindungsbolzen 40 über seinen Schaft 44 in dem zweiten verjüngten Rohrende 14 formschlüssig gehalten wird, bringt die im Durchgangskanal 16 komprimierte Schraubenfeder 50 eine Vorspannkraft auf den Verbindungsbolzen 40 in Richtung des zweiten verjüngten Rohrendes 14 auf.

Wie man anhand von Figur 2 erkennen kann, stützt sich eine schaftzugewandte Unterseite des Kopfes 42 an der radialen Innenwand des Durchgangskanals 16 oder des Rohrs 10 ab. Dieser Kontakt zwischen Kopf 42 und radialer Innenwand des Rohres 10 erzeugt aufgrund seines Reibschlusses Reibung, die einer Relativdrehung zwischen dem Rohr 10 und dem Verbindungsbolzen 40 entgegenwirkt. Vorzugsweise wird dieses einer Relativdrehung entgegenwirkende Reibmoment durch die Vorspannkraft der Schraubenfeder 50 verstärkt, da der Kontakt zwischen Kopf 42 und radialer Innenwand des Rohres 10 verstärkt wird.

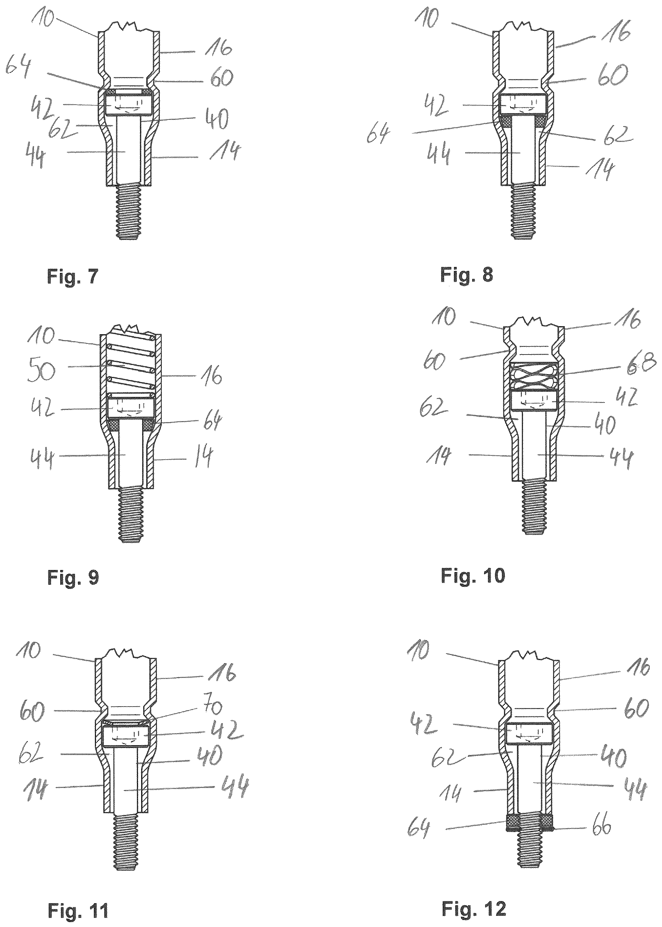

Gemäß der in Figur 9 gezeigten bevorzugten Ausführungsform vorliegender Erfindung wird dieses Reibmoment zusätzlich durch Anordnen eines Kunststoffrings 64 zwischen der schaftzugewandten Unterseite des Kopfes 42 und der radialen Innenwand des Rohrs 10 erhöht.

Das verjüngte zweite Rohrende 14 wird gemäß einer bevorzugten Ausführungsform vorliegender Erfindung in gleicher Weise erzeugt, also durch Verpressen, wie das erste verjüngte Rohrende 12 (siehe oben). Das zweite verjüngte Rohrende 14 weist vorzugsweise aber kein Mutterngewinde 18 auf.

In der in Figur 6 gezeigten bevorzugten Ausführungsform vorliegender Erfindung stützt sich die schaftzugewandte Unterseite des Kopfes 42 an einem Buchseneinsatz 46 ab. Dieser Buchseneinsatz 46 verjüngt den Innendurchmesser des Rohrs 10 am zweiten Rohrende 14, sodass der Verbindungsbolzen 40 formschlüssig im Rohr 10 gehalten wird.

Gemäß einer weiter bevorzugten Ausführungsform vorliegender Erfindung weist der Kopf 42 des Verbindungsbolzens 40 an der schaftabgewandten Seite ein Antriebsmittel, wie beispielsweise eine Torxöffnung, einen Schlitz, ein Kreuz oder ähnliches, auf. Das Antriebsmittel erlaubt das Drehen des Verbindungsbolzens 40 mit einem Werkzeug, welches durch das erste verjüngte Rohrende 12 und den Durchgangskanal 16 auf das Angriffsmittel zugreift und ein Drehmoment auf den Verbindungsbolzen 40 überträgt.

Gemäß einer bevorzugten Ausführungsform vorliegender Erfindung ist der Durchgangskanal 16 radial einwärts durch eine Kanalverjüngung 60 in seinem Innendurchmesser verringert bzw. verjüngt. Vorzugsweise ist die Kanalverjüngung 60 benachbart zum zweiten verjüngten Rohrende 14 angeordnet, wie die bevorzugten Ausführungsformen der Figuren 7-8 und 10-12 zeigen.

In den dargestellten bevorzugten Ausgestaltungen vorliegender Erfindung ist im Rohr 10 die Kanalverjüngung 60 den Innendurchmesser des Durchgangskanals 16 verringernd benachbart zum zweiten verjüngten Rohrende 14 angeordnet. Die Kanalverjüngung 60 stellt bevorzugt einen Aufnahmeraum 62 zum formschlüssigen Aufnehmen des Kopfes 42 des Verbindungsbolzens 40 bereit. Der Verbindungsbolzen 40 ist über seinen Kopf 42 formschlüssig und drehbar in dem Aufnahmeraum 62 gehalten.

Der Aufnahmeraum 62 eröffnet die Möglichkeit, den Verbindungsbolzen 40 in einem kleineren Bereich des Rohrs 10 als dem Durchgangskanal 16 bewegbar zu befestigen. Dadurch ist es nicht erforderlich, die Schraubenfeder 50 im Durchgangskanal 16 zu positionieren.

Um einen bevorzugten Reibkontakt zwischen dem Verbindungsbolzen 40 und dem Rohr 10 zu steigern, ist ein Kunststoffring 64, vorzugsweise ein Elastomerring oder ein O-Ring oder dergleichen, in dem Aufnahmeraum 62 angeordnet. Gemäß den Figuren 7 und 8 ist der Kunststoffring 64 an der schaftabgewandten Kopfoberseite des Kopfes 42 oder an der schaftzugewandten Unterseite des Kopfes 42 angeordnet.

Erfindungsgemäß bevorzugt ist der Kunststoffring 64 in axialer Richtung des Rohrs 10 durch den Kopf 42 innerhalb des Aufnahmeraums 62 komprimiert angeordnet. Auf diese Weise wird der Reibschluss oder der Kontakt zwischen dem Rohr 10 und dem Verbindungsbolzen 40 verstärkt. Dieser verstärkte Reibschluss oder Kontakt wirkt bevorzugt einer Relativdrehung zwischen dem Rohr 10 und dem Verbindungsbolzen 40 entgegen, wie oben bereits beschrieben worden ist.

Der gleiche bevorzugte Effekt lässt sich erzielen, wenn man statt des Kunststoffrings 64 oder ergänzend dazu eine Feder 66 zwischen der Kanalverjüngung 60 und der schaftabgewandten Oberseite des Kopfes 42 anordnet. Dies ist beispielgebend in den Figuren 10 und 11 gezeigt. In Figur 10 wird vorzugsweise eine Wellenfeder 66 und in Figur 11 eine Tellerfeder 66 genutzt.

In der bevorzugten Ausführungsform gemäß Figur 12 ist vorzugsweise ein Kunststoffring 64 oder ein Federring 66 auf dem Schaft 44 außerhalb des Rohrs 10, aber in Kontakt mit dem zweiten Rohrende 14, angeordnet. Da der Kunststoffring 64 und/oder der Federring 66 reibschlüssig auf dem Schaft 44 befestigt sind und eine Federvorspannung auf den Verbindungsbolzen 40 im Aufnahmeraum 62 aufbringen, wird auch durch diese Anordnung ein Kontakt und ein Reibschluss zwischen dem Verbindungsbolzen 40 und dem Rohr 10 verstärkt, wie es oben beschrieben worden ist.

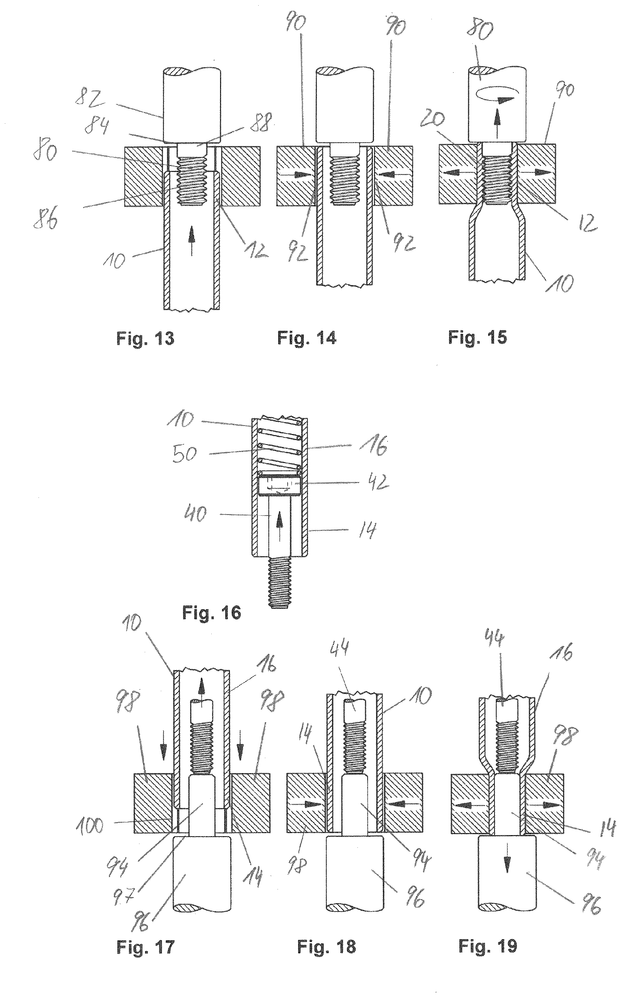

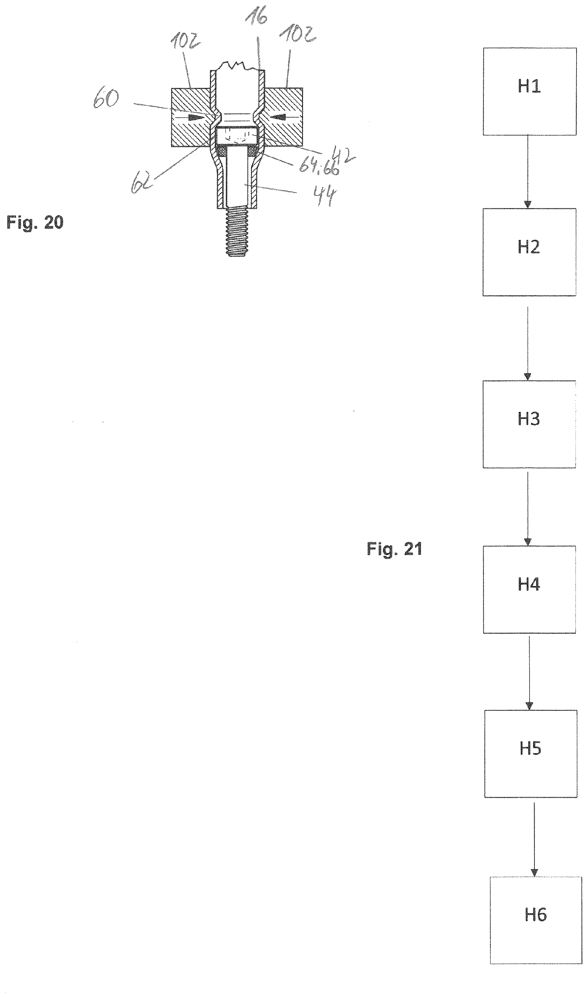

Die schematischen Darstellungen der Figuren 13-20 illustrieren verschiedene bevorzugte Herstellungsschritte der Bolzenmutter 1, die im Flussdiagramm der Figur 21 zusammengefasst sind. Trotz der gewählten Darstellung und der folgenden Beschreibung der Verfahrensschritte ist deren Reihenfolge nicht festgelegt und kann verändert werden.

Zunächst wird das zylindrische Rohr 10 bereitgestellt (Schritt H1), welches aus Metall oder Kunststoff besteht. Das zylindrische Rohr 10 hat die zwei offenen Rohrenden 12, 14, die über den Durchgangskanal 16 miteinander verbunden sind.

Um das bevorzugte erste verjüngte Rohrende 12 mit radial innenliegendem Mutterngewinde 20 zu erzeugen, wird das erste offene Rohrende 12 auf einem Gewindedorn 80 angeordnet (siehe Figur 13). Der Gewindedorn 80 ist mit einem Haltesteg 82 verbunden, der bevorzugt einen größeren Durchmesser als der Gewindedorn 80 zum Bilden eines Anschlags 84 aufweist. Vorzugsweise wird das erste Rohrende 12 bis zum Anschlag 84 auf den Gewindedorn 80 aufgeschoben, um ein auf dem Gewindedorn 80 angeordnetes Gewinde 86 in der gewünschten Tiefe des ersten offenen Rohrendes 12 anordnen zu können.

Gemäß einer bevorzugten Ausgestaltung des Gewindedorn 80 ist zwischen dem Anschlag 84 und dem Gewindeabschnitt 86 ein Zwischensteg 88 angeordnet. Der Zwischensteg 88 hat vorzugsweise einen größeren Außendurchmesser als der Gewindeabschnitt 86 und einen kleineren Außendurchmesser als der Haltesteg 82 mit Anschlag 84.

Nachdem das erste Rohrende 12 auf dem Gewindedorn 80 angeordnet worden ist, verengen mindestens zwei Backen 90 über eine radial einwärts gerichtete Bewegung das erste Rohrende 12 auf die Außenmaße des Gewindedorns 80 (siehe Figuren 14, 15). Die Backen 90 verjüngen dabei das erste Rohrende 12 auf die radiale Außenkontur des Gewindedorns 80 mit seinem Gewindeabschnitt 86 und dem bevorzugten Zwischensteg 88, sodass diese in die radiale Innenseite des ersten Rohrendes 12 eingeformt werden. Auf diese Weise werden das Mutterngewinde 20 und die bevorzugte Einrückung 22 ausgeformt (Schritte H2, H3).

Um den Verformungsprozess des ersten Rohrendes 12 zu unterstützen, wird das erste Rohrende 12 vor dem Verformen zunächst erwärmt. Der bevorzugte Schritt des Erwärmens erleichtert das Verformen eines Rohrs 10 aus Metall und auch eines Rohrs 10 aus Kunststoff. Gleiches gilt für das unten beschriebene Verformen des zweiten Rohrendes 14.

Die mindestens zwei Backen 90 üben über eine Backenfläche 92 eine verjüngende oder verengende radial einwärts gerichtete Kraft auf das erste Rohrende 12 aus. Daher werden bevorzugt die Backenflächen 92 in die radiale Außenseite des ersten Rohrendes 12 eingeformt und bilden auf diese Weise die oben beschriebenen Angriffsflächen 26 aus. Somit ergibt vorzugsweise eine Form der Backenflächen 92 vor, ob zwei Angriffsflächen 26, der Mehrkant 28 oder eine Rändelung 30 an der radialen Außenseite des ersten Rohrendes 12 erzeugt werden.

Nachdem das erste Rohrende 12 verengt worden ist, werden bevorzugt die Backen 90 vom ersten Rohrende 12 entfernt und der Gewindedorn 80 aus dem ersten Rohrende 12 herausgeschraubt (siehe Figur 15).

Gemäß einer bevorzugten Ausgestaltung des Herstellungsverfahrens wird die Schraubenfeder 50 im Durchgangskanal 16 angeordnet, die sich am verjüngten ersten Rohrende 12 abstützt (siehe Figur 16, Schritt H5).

Bevorzugt der Schraubenfeder 50 folgend wird der Verbindungsbolzen 40 mit dem Kopf 42 voraus in dem Durchgangskanal 16 angeordnet, sodass die Schraubenfeder 50 durch den Kopf 42 weiter komprimiert wird (Schritt H4). Dieser Schritt ist schematisch in Figur 16 veranschaulicht.

Um die Schraubenfeder 50 als Reibungsmittel und den Verbindungsbolzen 40 im Durchgangskanal 16 formschlüssig zu befestigen, wird bevorzugt der Verbindungsbolzen 40 mithilfe eines Verjüngungsdorns 94 mit Haltesteg 96 und Anschlag 98 in den Durchgangskanal 16 geschoben, bis der Anschlag 98 am zweiten Rohrende 14 anliegt. Zudem wird der derart im zweiten Rohrende 14 angeordnete Verjüngungsdorn 94 mit dem zweiten Rohrende 14 zwischen mindestens zwei Backen 98 mit Backenflächen 100 bewegt.

Der Verjüngungssteg 94 weist bevorzugt bis auf einen runden Querschnitt keine Außenkontur auf. Der runde Querschnitt des Verjüngungsstegs 94 ist vorzugsweise etwas größer im Außendurchmesser als der Außendurchmesser des Schafts 44. Dadurch ist gewährleistet, dass der Verbindungsbolzen 40 formschlüssig drehbar im Durchgangskanal 16 gehalten wird, sobald das zweite Rohrende 14 durch die Backen 98 auf die Außenmaße des Verjüngungsstegs 94 verengt bzw. verjüngt worden ist.

Figur 18 veranschaulicht schematisch, wie im Schritt H6 die Backen 98 das zweite Rohrende 14 auf den Verjüngungsdorn 94 drücken und damit verformend verengen. Nachdem dieser Schritt abgeschlossen ist, werden die Backen 98 vom zweiten verjüngten Rohrende 14 entfernt und der Verjüngungsdorn 94 aus dem zweiten Rohrende 14 herausgezogen. Die Vorspannkraft der Schraubenfeder 50 im Durchgangskanal drückt den Schaft 44 in Richtung des zweiten Rohrendes 14, sodass dieser aus dem zweiten Rohrende 14 herausragt.

Gemäß einer weiteren bevorzugten Ausführungsform des Herstellungsverfahrens wird das zweite Rohrende 14 im Radialinneren verjüngt, in dem ein bekannter Einsteckeinsatz oder ein Buchseneinsatz im zweiten Rohrende 14 befestigt wird.

Gemäß einer weiteren bevorzugten Ausführungsform vorliegender Erfindung wird mithilfe von mindestens zwei Backen 102 eine radial innere Kanalverjüngung 60 in den Durchgangskanal 16 eingedrückt oder eingeformt (siehe Figur 20). Die Kanalverjüngung 60 erzeugt den Aufnahmeraum 62 für den Kopf 42 des Verbindungsbolzens 40.

Um den Verbindungsbolzen 40 in dem Rohr 10 ohne Schraubenfeder 50 im Aufnahmeraum 62 anordnen zu können, wird der Verbindungsbolzen 40 mit dem Kopf 42 voraus in den Aufnahmeraum 62 gedrückt. Dazu greift vorzugsweise ein Steg 96 ohne Verjüngungsdorn 94 am Schaft 44 an und drückt diesen in den Aufnahmeraum 62. Nachfolgend verformen bevorzugt mindestens zwei Backen 98 das zweite Rohrende 14 radial einwärts, um den Verbindungsbolzen 40 formschlüssig drehbar im Aufnahmeraum 62 zu befestigen.

Vorzugsweise werden vor dem Anordnen des Kopfes 42 im Aufnahmeraum 62 der Kunststoffring 64 und/oder die Feder 66 an der schaftabgewandten und/oder an der schaftzugewandten Seite des Kopfes 42 angeordnet, sodass nach dem Verjüngen des zweiten Rohrendes 14 die bevorzugten Anordnungen gemäß den Figuren 7, 8, 10, 11 vorliegen.

### 6. Bezugszeichenliste

- 1: Bolzenmutter
- 3: Rohrschelle
- 10: Rohr
- 12: erstes verjüngtes offenes Rohrende
- 14: zweites verjüngtes offenes Rohr
- 16: Durchgangskanal
- 18: radiale Innenwand am ersten verjüngten Rohrende 12
- 20: Mutterngewinde am ersten verjüngten Rohrende 12
- 22: eingerückte Strecke oder Einrückung des Gewindes 20 in das erste verjüngte Rohrende 12
- 24: Antriebsmittel
- 26: Angriffsflächen
- 28: Mehrkant
- 30: Rändelung
- 32: Angriffsmittel des Durchgangskanals 16
- 34: Angriffsfläche
- 36: Mehrkant
- 38: Rändelung
- 50: Schraubenfeder
- 40: Verbindungsbolzen
- 42: Kopf
- 44: Schaft
- 46: Buchseneinsatz
- 50: Schraubenfeder
- 60: Kanalverjüngung
- 62: Aufnahmeraum für Kopf 42 des Verbindungsbolzens 40
- 64: Kunststoffring
- 66: Feder
- 68: Wellenfeder
- 70: Tellerfeder
- 80: Gewindedorn
- 82: Haltesteg
- 84: Anschlag
- 86: Gewindeabschnitt
- 88: Zwischensteg
- 90: Backen
- 92: Backenfläche
- 94: Verjüngungsdorn
- 96: Haltesteg
- 97: Anschlag
- 98: Backen
- 100: Backenflächen
- 102: Backen
- G: Gewindestange
- D: Decke
- R: Rohr

## Patentansprüche

1. Eine Bolzenmutter (1) zur Befestigung einer Unterdeckenkonstruktion, die die folgenden Merkmale aufweist:
a. ein Rohr (10) mit einem ersten offenen Rohrende (12) und einem zweiten offenen Rohrende (14) sowie einem die Rohrenden (12, 14) verbindenden Durchgangskanal (16), wobei das erste Rohrende (12) und bevorzugt das zweite offene Rohrende (14) derart verjüngt sind, dass sie einen kleineren Innen- und Außendurchmesser als der sie verbindende Durchgangskanal (16) aufweisen,
b. ein Mutterngewinde (30), das an einer radialen Innenseite benachbart zum ersten Rohrende (12) angeordnet ist,
c. einen Verbindungsbolzen (40), vorzugsweise ein Gewindebolzen, mit einem Schaft (44) und einem Kopf (42), der angrenzend an das zweite Rohrende (14) formschlüssig und drehbar in dem Durchgangskanal (16) gehalten ist, und
d. ein Reibungsmittel, mit dem ein Reibmoment zwischen dem Rohr und dem Verbindungsbolzen generierbar ist, welches einer Relativdrehung zwischen dem Rohr (10) und dem Verbindungsbolzen (40) entgegenwirkt.

2. Die Bolzenmutter (1) gemäß Patentanspruch 1, in der das zweite Rohrende (14) derart verjüngt ist, dass ein Innendurchmesser einer Verjüngung (18) kleiner ist als ein Außendurchmesser des Kopfes (42), um den Verbindungsbolzen (40) formschlüssig im Durchgangskanal (16) zu halten.

3. Die Bolzenmutter (1) gemäß Patentanspruch 2, in der die Verjüngung (18) durch einen Buchseneinsatz oder durch eine Verpressung (20) des Rohrs (10) bereitgestellt ist.

4. Die Bolzenmutter (1) gemäß einem der vorhergehenden Patentansprüche, in der der Verbindungsbolzen (40) über den Kopf (42) in Richtung des zweiten verjüngten Rohrendes (14) axial federvorgespannt ist.

5. Die Bolzenmutter (1) gemäß Patentanspruch 4, in der eine Schraubenfeder innerhalb des Durchgangskanals als Reibungsmittel angeordnet zwischen dem ersten verjüngten Rohrende (12) und dem Kopf (42) den Verbindungsbolzen (40) in Richtung des zweiten verjüngten Rohrendes (14) federvorspannt.

6. Die Bolzenmutter (1) gemäß Patentanspruch 2 oder 3, in der der Kopf (42) zwischen dem zweiten verjüngten Rohrende (14) und einer Kanalverjüngung benachbart zum zweiten verjüngten Rohrende (14) formschlüssig drehbar gehalten ist.

7. Die Bolzenmutter (1) gemäß Patentanspruch 6, in der ein Elastomerring als Reibungsmittel zwischen dem Kopf (42) und der Kanalvejüngung und/oder dem Kopf (42) und dem zweiten verjüngten Rohrende (14) angeordnet ist.

8. Die Bolzenmutter (1) gemäß Patentanspruch 6, in der eine Feder zwischen der Kanalverjüngung und dem Kopf (42) angeordnet ist, sodass der Verbindungsbolzen in Richtung des zweiten verjüngten Rohrendes (14) zwischen der Kanalverjüngung und dem zweiten verjüngten Rohrende (14) federvorgespannt ist.

9. Die Bolzenmutter (1) gemäß Patentanspruch 6, in der ein Elastomerring und/oder ein Federring als Reibungsmittel auf dem Schaft (44) des Verbindungsbolzens (40) außerhalb des Rohrs (10) angeordnet ist/sind, mit dem ein Reibmoment zwischen dem zweiten Rohrende (14) und dem Verbindungsbolzen (40) generierbar ist.

10. Die Bolzenmutter (1) gemäß einem der vorhergehenden Patentansprüche, in der das erste verjüngte offene Rohrende (12) an einer radialen Außenseite ein Antriebsmerkmal, vorzugsweise zwei einander gegenüberliegende Angriffsflächen oder einen Mehrkant, aufweist.

11. Die Bolzenmutter (1) gemäß einem der vorhergehenden Patentansprüche, in der der Durchgangskanal an einer radialen Außenseite ein Antriebsmerkmal, vorzugsweise zwei einander gegenüberliegende Angriffsflächen oder einen Mehrkant, aufweist.

12. Die Bolzenmutter (1) gemäß einem der vorhergehenden Patentansprüche, in der ein Drehsinn des Mutterngewindes des ersten Rohrendes (12) und eines Gewindes des Schafts (44) des Verbindungsbolzens (40) gleich sind.

13. Eine Unterdeckenkonstruktion, insbesondere ein Kanalsystem zur Belüftung, für Verkabelung oder ein Wandelement, welche mit einer Mehrzahl von Bolzenmuttern gemäß einem der vorhergehenden Patentansprüche an einer Wand oder Decke befestigt ist.

14. Ein Herstellungsverfahren einer Bolzenmutter (1), insbesondere einer Bolzenmutter (1) gemäß einem der vorhergehenden Patentansprüche 1 bis 12, das die folgenden Schritte aufweist:
a. Bereitstellen (H1) eines zylindrischen Rohrs (10) mit einem ersten (12) und einem zweiten offenen Rohrende (14) und einem die Rohrenden (12, 14) verbindenden Durchgangskanal (16), das einen Innen- und einen Außendurchmesser aufweist,
b. Verengen (H2) des ersten Rohrendes (12) mit einem Innen- und Außendurchmesser, die kleiner sind als die des Rohrs (10) und des Durchgangskanals,
c. Einformen (H3) eines Mutterngewindes in eine radiale Innenseite des ersten radialen Rohrendes (12),
d. Anordnen (H4) in dem Durchgangskanal eines Verbindungsbolzens (40) mit einem Kopf (42) und einem Schaft (44) und Anordnen (H5) eines Reibungsmittels angreifend an den Kopf (42) des Verbindungsbolzens (40), das einer Relativdrehung zwischen dem Rohr (10) und dem Verbindungsbolzen (40) entgegenwirkt, und
e. Verengen (H6) des zweiten Rohrendes (14) durch Verpressen des zweiten Rohrendes (14) oder Einsetzen eines Einsteckeinsatzes (60) ohne Mutterngewinde (30) oder eines Buchseneinsatzes derart, dass der Schaft (44) am zweiten Rohrende aus dem Durchgangskanal (16) hinaus ragt.

15. Das Herstellungsverfahren einer Bolzenmutter (1) gemäß Patentanspruch 14, mit dem weiteren Schritt:
Anordnen (H5) einer Feder (50) als ein Reibungsmittel im Durchgangskanal (16) zum axialen Vorspannen des Verbindungsbolzens (40).

16. Das Herstellungsverfahren einer Bolzenmutter (1) gemäß Patentanspruch 14 oder 15, mit dem weiteren Schritt:
Erzeugen (H7) einer Kanalverjüngung benachbart zum zweiten Rohrende (14), um den Kopf (42) zwischen der Kanalverjüngung und dem zweiten Rohrende (14) formschlüssig zu halten.

17. Das Herstellungsverfahren gemäß einem der Patentansprüche 14 bis 16, welches des Weiteren aufweist:
Anordnen (H8) eines Rings (52) aus elastischem Material als ein Reibungsmittel zwischen dem Kopf (42) des Verbindungsbolzens (40) und dem zweiten Rohrende (14) oder zwischen dem Kopf (44) und einer Kanalverjüngung.

18. Das Herstellungsverfahren gemäß einem der Patentansprüche 14 bis 17, mit dem weiteren Schritt:
Erzeugen eines Antriebsmittels, vorzugsweise zwei einander gegenüberliegend angeordnete Angriffsflächen oder einen Mehrkant, an einer radialen Außenseite des verengten ersten Rohrendes und/oder an einer radialen Außenseite des Durchgangskanals.
